# FASCICULE DE BREVET EUROPEEN

(11) **EP 0 599 679 B1**
(45) Date de publication et mention de la délivrance du brevet: **07.01.1998**
(21) Numéro de dépôt: 93402675.8
(22) Date de dépôt: 29.10.1993
(51) Int. Cl.: H04B 17/00

(54) **Système de télébouclage pour émetteur-récepteur de radiotélécommunications**
Fernrückschleifsystem für Funkübertragungs-Sendeempfänger
Remote loopback system for radiocommunications transceiver

(30) Priorité: 27.11.1992 FR 9214331
(43) Date de publication de la demande: 01.06.1994
(73) Titulaire: SAT (Société Anonyme de Télécommunications), 75116 Paris (FR)
(72) Inventeur: Follet, Thierry, F-75625 Paris (FR)
(74) Mandataire: Cabinet Martinet & Lapoux

(56) Documents cités:
- WO-A-91/19364
- PATENT ABSTRACTS OF JAPAN vol. 016, no. 294 (E-1225)29 Juin 1992 & JP-A-40 078 237 (NEC)
- PATENT ABSTRACTS OF JAPAN vol. 014, no. 117 (E-0898)5 Mars 1990 & JP-A-13 014 444 (FUJITSU)

## Description

La présente invention concerne un système de télébouclage pour système émetteur-récepteur de radiotélécommunications. Un tel système de télébouclage teste en local, par bouclage de la chaîne d'émission et de la chaîne de réception dans le système émetteur-récepteur, le fonctionnement de ce dernier.

Sachant que les fréquences d'émission et de réception du système émetteur-récepteur sont différentes, un télébouclage du système émetteur-récepteur est assuré, en outre, par l'intermédiaire de moyens de mélange, ou transposition, en fréquence afin de transposer la fréquence d'un signal émis en sortie de la chaîne d'émission en une fréquence d'un signal reçu, avant que ce dernier soit appliqué par bouclage en entrée de la chaîne de réception. Des séquences de données respectivement émises en entrée de la chaîne d'émission et reçues par bouclage en sortie de la chaîne de réception sont comparées pour opérer un test en local du système émetteur-récepteur. Un tel dispositif est p. ex. connu du document Patent Abstracts of Japan, vol. 014, n^{º} 117 (E-0898), 5 mars 1990, & JP-A-13 014 444 (Fujitsu).

L'invention vise à fournir un système de télébouclage dans lequel la transposition en fréquence est effectuée au moyen d'un guide d'onde.

A cette fin, un système de télébouclage pour tester un système émetteur-récepteur de radiotélécommunications comprenant en outre une chaîne d'émission et une chaîne de réception, ledit système de télébouclage comprenant :
- des moyens pour émettre des premières séquences de données à une entrée de ladite chaîne d'émission,
- des moyens pour recevoir des secondes séquences de données produites à une sortie de la chaîne de réception en réponse auxdites premières séquences émises,
- des moyens de traitement pour comparer lesdites premières et secondes séquences de données afin de déduire des résultats de test dudit système émetteur-récepteur, et
- un moyen oscillateur activé par les moyens de traitement et produisant un signal d'oscillateur ayant une fréquence égale à une différence entre une fréquence d'émission relative à un signal micro-onde sortant de la chaîne d'émission et une fréquence de réception relative à un signal micro-onde entrant dans la chaîne de réception, en dépendance d'un plan de fréquence de fonctionnement dudit système émetteur-récepteur,
est caractérisé en ce qu'il comprend des moyens de transposition en fréquence comprenant un guide d'onde principal ayant un accès recevant ledit signal micro-onde sortant de la chaîne d'émission à travers un moyen de filtrage d'émission et un duplexeur, et transmettant ledit signal micro-onde entrant dans la chaîne de réception à travers ledit duplexeur et un moyen de filtrage de réception,
un guide d'onde auxiliaire ayant une section transversale plus petite que celle du guide d'onde principal et débouchant transversalement dans le guide principal,
un moyen-support diélectrique de circuit imprimé micro-onde logé dans le guide d'onde auxiliaire,
un moyen de couplage supporté par ledit moyen-support pour coupler les guide d'onde principal et auxiliaire, et
un moyen mélangeur supporté par le moyen-support pour mélanger, à travers le moyen de couplage, le signal d'oscillateur avec ledit signal micro-onde sortant reçu par ledit accès de guide d'onde principal afin de produire ledit signal micro-onde entrant transmis par ledit accès de guide d'onde principal.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme d'un système émetteur-récepteur de radiotélécommunications pour faisceau hertzien selon la technique antérieure;
- la figure 2 est un bloc-diagramme schématique d'un système de télébouclage selon l'invention;
- la figure 3 est une vue en coupe schématique prise le long de la ligne III-III dans la figure 4, d'un dispositif de transposition en fréquence à guide d'onde dans le système de télébouclage selon l'invention;
- la figure 4 est une vue en coupe longitudinale du dispositif de transposition en fréquence, prise le long de la ligne IV-IV de la figure 3;
- la figure 5 est une vue de dessus schématique d'un circuit imprimé du dispositif de transposition en fréquence à guide d'onde montré aux figures 3 et 4;
- la figure 6 est une vue en coupe longitudinale prise le long de la ligne axiale VI-VI de la figure 7, de l'un de deux demi-blocs d'un coffret à guide d'onde incluant un dispositif de branchement dans le système émetteur-récepteur et le dispositif de transposition en fréquence montré aux figures 3 et 4; et
- la figure 7 montre en détail une série de cavités cylindriques constituant un filtre d'émission/de réception du système émetteur-récepteur de radiotélécommunications et formées par assemblage des deux demi-blocs à hyperfréquence, tels que celui montré à la figure 6.

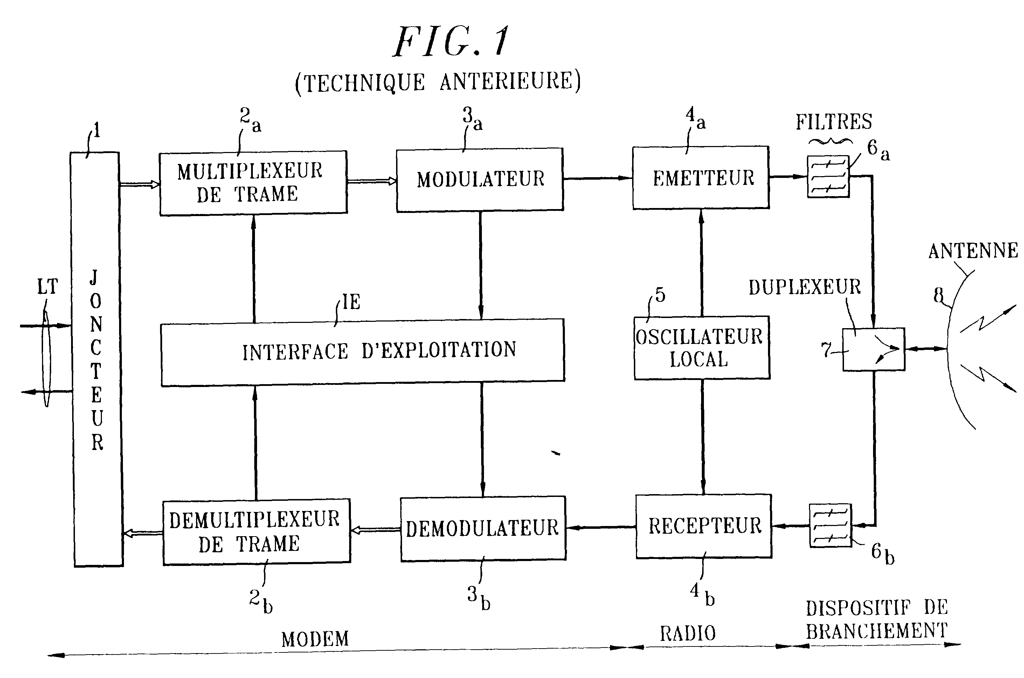

En référence à la figure 1, un système émetteur-récepteur de radiotélécommunications pour faisceau hertzien propre à être testé au moyen d'un système de télébouclage selon l'invention comprend typiquement des moyens de modulation-démodulation MODEM des moyens d'émission-réception radioélectriques RADIO, un dispositif de branchement et une antenne 8. Une chaîne de réception et une chaîne d'émission du système émetteur-récepteur sont respectivement dédiées aux traitements des signaux reçus et des signaux à transmettre par le système à travers l'antenne 8. Les moyens de modulation-démodulation MODEM comprennent un joncteur 1 à une ligne de transmission bidirectionnelle LT, puis un multiplexeur de trame 2ₐ et un modulateur 3ₐ appartenant à la chaîne d'émission, et enfin un démodulateur 3_{b} et un démultiplexeur de trame 2_{b} appartenant à la chaîne de réception. Les moyens radioélectriques RADIO comprennent un émetteur 4ₐ et un récepteur 4_{b} qui appartiennent respectivement aux chaînes d'émission et de réception, et à des entrées de porteuse desquels est appliqué un signal de porteuse produit par un oscillateur local 5. Le dispositif de branchement comprend un duplexeur 7 relié à l'antenne 8 qui assure la séparation entre des signaux à transmettre vers l'antenne 8 et des signaux reçus à travers l'antenne 8. Le duplexeur 7 est connecté, en entrée, à une sortie de l'émetteur 4ₐ à travers un filtre passe-bande d'émission 6ₐ, et, en sortie, à une entrée du récepteur 4_{b} à travers un filtre passe-bande de réception 6_{b}.

Brièvement le fonctionnement d'un tel système émetteur-récepteur pour faisceau hertzien est le suivant. Le joncteur 1 découple à travers un transformateur différentiel un signal provenant de la ligne LT d'un signal à transmettre dans la ligne LT. Ces deux signaux sont en un code de ligne, par exemple de type bipolaire, tel que le code HDB3. Dans le joncteur 1, un décodeur décode le signal codé-HDB3 reçu en un signal d'information binaire appliqué au multiplexeur de trame 2ₐ, et un codeur code un signal d'information binaire fourni par le démultiplexeur de trame 2_{b} en un signal codé-HDB3 à transmettre dans la ligne LT.

En émission, le signal d'information binaire est multiplexé par le multiplexeur 2ₐ avec des informations d'exploitation/maintenance reçues d'une interface d'exploitation IE en un signal multiplexé. Ce signal multiplexé est modulé par le modulateur 3ₐ, par exemple selon une modulation de phase à 4 états. Le signal modulé est transposé dans l'émetteur 4ₐ à la fréquence du signal de porteuse produit par l'oscillateur local 5. Après transposition en fréquence, le signal transposé est transmis à l'antenne 8 à travers le filtre d'émission 6ₐ pour être radiodiffusé.

En réception, les fonctions des éléments 6_{b}, 4_{b}, 3_{b}, 2_{b} et 1 dans la chaîne de réception sont inversées par rapport à celles décrites ci-dessus en émission.

Il est à noter que dans un tel système émetteur-récepteur de radiotélécommunications pour faisceau hertzien, les bandes de fréquence des signaux émis et reçus par radiodiffusion sont distinctes et un plan de fréquence est déterminé afin d'associer des plages de fréquence différentes à ces signaux émis et reçus. Ainsi, en pratique, un écart de fréquence existe entre chaque canal d'émission et chaque canal de réception.

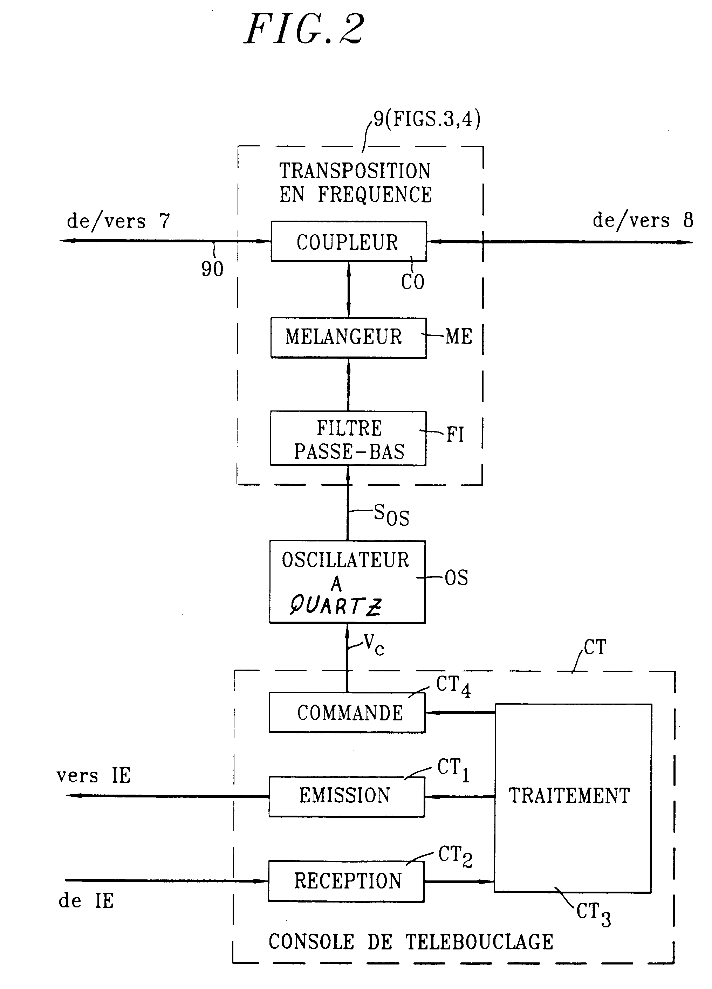

En référence à la figure 2, un système de télébouclage selon l'invention comprend un coupleur CO, un mélangeur ME, un filtre passe-bas FI, un oscillateur à quartz OS et une console de télébouclage CT. La console de télébouclage CT, par exemple commandé par un opérateur, comprend, en outre, des moyens d'émission CT₁, des moyens de réception CT₂, des moyens de traitement CT₃ et des moyens de commande CT₄.

Les moyens de traitement CT₃ constituent l'organe central de la console de télébouclage CT et vérifient le fonctionnement du système émetteur-récepteur de radiotélécommunications en local. Pour cela, des séquences d'informations binaires respectivement émises et reçues à travers les moyens d'émission CT₁ et de réception CT₂ sont comparées dans les moyens de traitement CT₃. Les moyens d'émission CT₁ et de réception CT₂ sont reliés respectivement à des entrée et sortie de l'interface d'exploitation IE.

En se reportant à la figure 1, lors d'une phase de test du système émetteur-récepteur de faisceau hertzien par télébouclage, les séquences de données binaires transmises par les moyens d'émission CT₁ à l'interface d'exploitation IE, sont appliquées à une entrée du multiplexeur de trame 2ₐ. Puis ces séquences de données binaires sont appliquées à une entrée de la chaîne d'émission incluant en cascade le modulateur 3ₐ, l'émetteur 4ₐ et le filtre 6ₐ où elles sont successivement modulées, transposées et filtrées. En sortie du duplexeur 7, et se reportant à la figure 2, les coupleur CO et mélangeur ME, étroitement combinés du point de vue structurel mais dissociés fonctionnellement dans la figure 2 pour faciliter la compréhension, effectuent un mélange des séquences de données binaires modulées, transposées puis filtrées, en un signal hyperfréquence issu du duplexeur 7, avec un signal d'oscillateur S_{OS}. Ce signal d'oscillateur S_{OS} est un signal produit par l'oscillateur à quartz OS puis filtré par le filtre FI. Il est à noter que l'oscillateur à quartz peut être remplacé par un synthétiseur qui génère plusieurs fréquences en dépendance des plans de fréquences de l'émetteur-récepteur.

Dans la console de télébouclage CT, les moyens de commande CT₄ sous le contrôle des moyens de traitement, produisent un signal de commande V_{c} dont des premier et second états respectifs active et désactive l'oscillateur à quartz OS. La fréquence de l'oscillateur à quartz OS est fixée à une valeur égale à la différence de fréquence entre les bandes de fréquence d'émission et de réception. Grâce aux couplage et mélange effectués par les coupleur CO et mélangeur ME, la fréquence du signal hyperfréquence issu du filtre 6ₐ est transposé à une fréquence de réception puis est appliqué à l'entrée de la chaîne de réception incluant le filtre 6_{b} , le récepteur 4_{b}, le démodulateur 3_{b} et le démultiplexeur de trame 2_{b}. Le démultiplexeur de trame prélève des séquences binaires reçues et les transmet à l'interface d'exploitation IE pour être transmises aux moyens de réception CT₂ de la console de télébouclage CT. Les moyens de traitement CT₃ comparent des séquences binaires émises et des séquences binaires reçues et analysent le résultat de ces comparaisons pour vérifier le bon fonctionnement du système émetteur-récepteur de radiotélécommunications, ou pour déclencher une alarme et une opération de maintenance du système émetteur-récepteur.

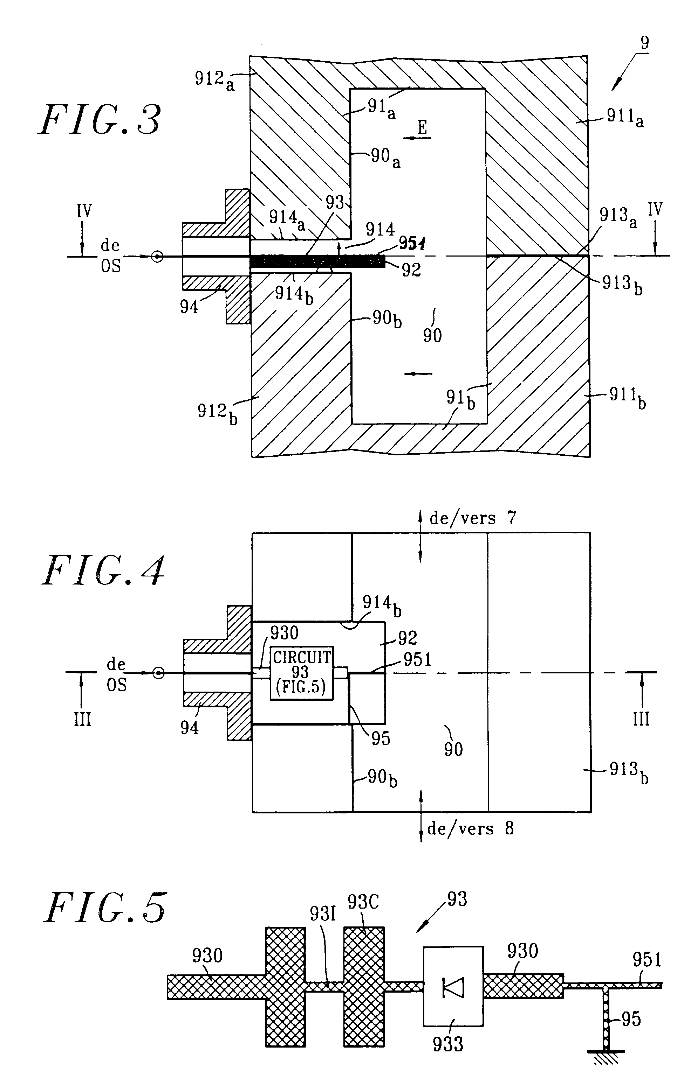

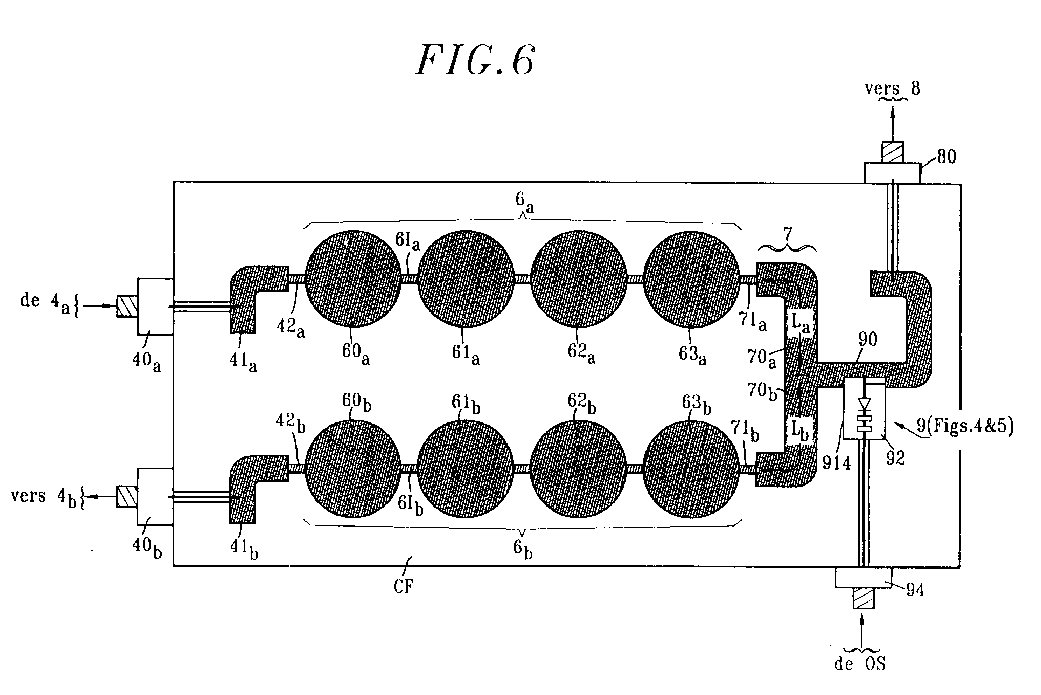

En référence aux figures 3 et 4, les coupleur CO, mélangeur ME et filtre FI montrés schématiquement à la figure 2 sont réunis dans une première réalisation selon l'invention, en un dispositif de transposition en fréquence à guide d'onde 9.

Le dispositif de transposition en fréquence 9 se présente sous la forme d'un bloc parallélépipédique métallique 91 dans lequel est ménagé un trou central à section transversale rectangulaire afin de constituer une portion d'un guide d'onde rectangulaire principal 90 reliant l'accès bidirectionnel du duplexeur 7 et l'antenne 8. De préférence, le mode électromagnétique TE₀₁ est excité dans le guide d'onde 90. Selon la réalisation illustrée à la figure 3, le champ transverse électrique E est horizontal, et la section transversale du guide d'onde 90 a une longueur suivant la verticale supérieure au double de sa largeur suivant l'horizontale. Le bloc 91 résulte de la réunion de deux demi-blocs métalliques 91ₐ et 91_{b} sensiblement symétriques suivant l'un des deux plans longitudinaux médians du guide d'onde 90, par exemple le plan de trace IV-IV suivant la largeur de section transversale dans la figure 3. Les demi-blocs 91ₐ et 91_{b} sont assemblés par des moyens connus tels que vis.

Chacun des deux demi-blocs 91ₐ et 91_{b} a une section transversale en U ayant une première branche 911ₐ, 911_{b} et une seconde branche 912ₐ, 912_{b} qui sont dissymétriques. Les premières branches 911ₐ et 911_{b} ont des faces planes en regard 913ₐ et 913_{b} qui sont accolées. Dans les secondes branches 912ₐ et 912_{b} sont pratiquées des rainures 914ₐ et 914_{b} non symétriques par rapport au plan longitudinal IV-IV de manière à former un guide d'onde auxiliaire 914 de section sensiblement rectangulaire inférieure à celle du guide principal 90. Selon les figures 3 et 4, les longueur et largeur de section transversale du guide auxiliaire 914 s'étendent respectivement suivant la direction de propagation et la longueur de section transversale du guide principal 90.

Le dispositif de transposition en fréquence 9 comprend également un support mince rectangulaire 92 en matériau diélectrique qui supporte un circuit imprimé 93 avec des composants à hyperfréquence (micro-onde) décrits ultérieurement. Le support 92 est logé dans la rainure 914_{b} formée dans le demi-bloc 91_{b} qui a une profondeur sensiblement égale à l'épaisseur du support 92 et qui est très petite par rapport à celle de la rainure 914ₐ. La rainure 914ₐ est ainsi le lieu prépondérant de la propagation des ondes dans le guide auxiliaire 914. La face supérieure imprimée du support 92 est localisée dans le guide 914 suivant le plan médian longitudinal IV-IV de manière à constituer une ligne triplaque dans laquelle le champ électrique, essentiellement vertical suivant la largeur du guide 914, correspondant à la profondeur de la rainure 914ₐ, peut être couplé au champ électrique en mode TE_{O1} dans le guide principal 90. La face supérieure du support 92 supportant le circuit imprimé est ainsi maintenue dans le plan médian longitudinal IV-IV entre les demi-blocs 91ₐ et 91_{b}, c'est-à-dire suivant un plan médian de propagation de champ électrique nul dans le guide principal 90, tout en assurant des conditions de couplage en mode TE₀₁ , et donc des conditions aux limites entre les deux guides avec des pertes minimales.

Une entrée du circuit imprimé 93 constitué de composants à hyperfréquence, du type triplaque, est connectée à la sortie de l'oscillateur OS (figure 2) à travers un câble coaxial terminé par un raccord coaxial 94 dont le conducteur central est prolongé par un microruban conducteur central 930 du circuit imprimé et dont le conducteur cylindrique externe est lié à une face longitudinale du bloc de masse 91.

Du côté du guide d'onde 90, le circuit 93 est terminé par un moyen de couplage électrique 951 fixé suivant le plan médian longitudinal de champ électrique nul IV-IV sur une portion du support diélectrique 92 qui saille depuis le guide auxiliaire 914 et pénètre dans le guide principal 90. Le moyen de couplage 951 matérialise le coupleur CO (figure 3) et comporte une portion de ruban conducteur relié au conducteur central 930 du circuit 93. La portion 951 s'étend suivant l'axe du guide auxiliaire 914 et donc suivant le petit axe de section transversale du guide 90 afin d'assurer un couplage électrique optimal.

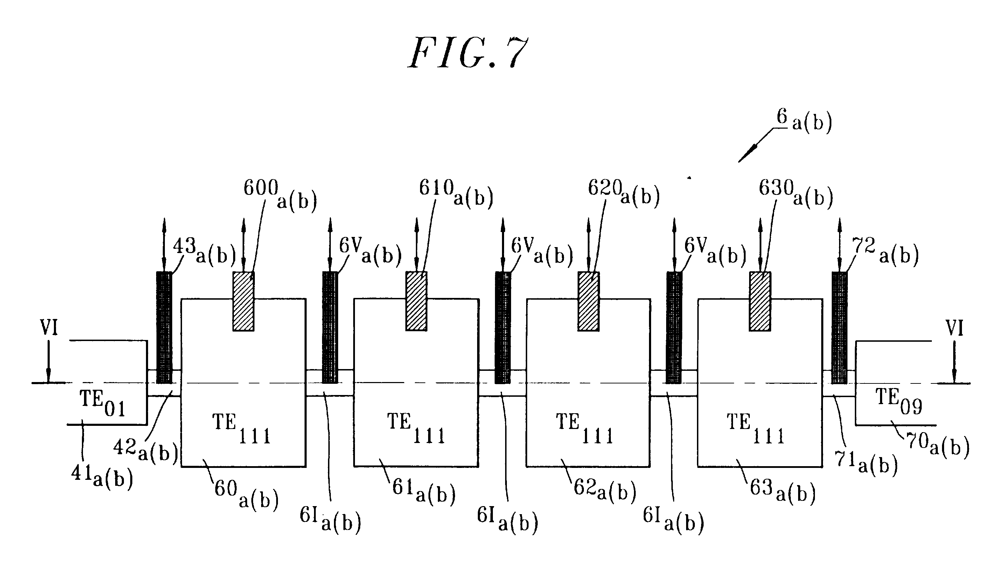

En référence à la figure 5, le circuit imprimé 93 comprend, d'une manière connue, le filtre passe-bas FI sous la forme de lignes de type quart d'onde alternées à haute impédance (inductance) 93I et basse impédance (capacité) 93C, et le mélangeur ME sous la forme d'une diode Schottky 933 intégrée dans le support diélectrique 92 et interconnectée entre le ruban central 930 du circuit 93 et une paroi de masse du guide 914 sous-jacente au support 92.

Il est rappelé que le but essentiel d'un tel dispositif à guide d'onde selon l'invention consiste en le mélange entre, d'une part, le signal hyperfréquence émis en sortie de la chaîne d'émission du système émetteur-récepteur de radiotélécommunications, ou plus précisément du duplexeur 7 (Figure 1), et, d'autre part, du signal S_{OS} produit par l'oscillateur à quartz OS. Ce mélange permet de ramener la fréquence dudit signal émis à la fréquence de signal de réception, la fréquence du signal produit par l'oscillateur à quartz OS étant égale à la différence de ces deux fréquences.

Dans le cadre de cette réalisation, les deux extrémités du guide d'onde principal 90 dans le bloc de masse 9 sont couplées respectivement au duplexeur 7 et à l'antenne 8 au moyen de guide(s) d'onde(s) et/ou de câble(s) coaxial(aux). Dans le guide d'onde 90 sont propagées des premières micro-ondes correspondant au signal hyperfréquence produit par l'émetteur 4ₐ. Un couplage est réalisé entre ces premières micro-ondes et des secondes micro-ondes produites par l'oscillateur OS à travers le moyen de couplage 951.

La sortie de l'oscillateur à quartz OS (Figure 5) est appliquée à une entrée du filtre passe-bas 93I-93C du circuit imprimé 93. La sortie du filtre passe-bas est reliée à la cathode de la diode 933 dont l'anode est reliée, d'une part, à la portion de couplage électrique 951 et, d'autre part, à la masse au moyen d'un brin conducteur 95. Un tel brin conducteur 95 met l'anode de la diode 933 à la masse et permet ainsi de polariser cette dernière.

Le principe de fonctionnement de la diode 933 en mélangeur est le suivant. La diode 933 est une diode Schottky qui présente, outre des caractéristiques habituelles d'une diode, des performances de rapidité adaptées aux signaux à hyperfréquence. Il est à noter qu'un tel "mélangeur" à diode utilisé en hyperfréquence ne réalise pas une "multiplication parfaite" du signal hyperfréquence issu de la chaîne d'émission avec le signal produit par l'oscillateur à quartz OS. Le signal S_{OS} produit par l'oscillateur à quartz OS est appliqué à la cathode de la diode 933. Cette dernière est passante si le courant la traversant est non nul et donc si la différence des tensions d'anode V_{A} et de cathode V_{K} , (V_{A} - V_{K}) est positive. Cette diode 933 "détectrice" ne laisse passer un champ électrique associé au signal produit par l'oscillateur à quartz OS que lorsque la diode est passante, et donc lorsque la tension d'anode V_{A} associée aux premières micro-ondes est supérieure à la tension de cathode à la sortie du filtre 93I-93C. Ainsi en fonction de la polarité de V_{K}, le champ électrique des premières micro-ondes dans le guide d'onde 90 est non modifié (diode bloquée) ou modifié. C'est le principe même d'un mélangeur par superposition.

Compte tenu du couplage réalisé par le moyen de couplage 951, des micro-ondes ayant une fréquence égale à la différence des fréquences des premières micro-ondes et secondes micro-ondes sont produites. Cette fréquence correspond à la fréquence de réception. Ces micro-ondes transposées à la fréquence de réception et produites par le moyen de couplage sont propagées dans le guide d'onde vers le duplexeur 7, pour être retransmises sous forme de signal électrique dans la chaîne de réception du système émetteur-récepteur. En référence à la figure 2, au niveau de l'interface d'exploitation IE, des secondes séquences binaires sont ainsi transmises aux moyens de réception CT₂ de la console de télébouclage CT. Ces secondes séquences binaires sont comparées dans les moyens de traitement CT₃ aux premières séquences binaires émises. Un test du système émetteur-récepteur est ainsi effectué.

Selon une seconde réalisation montrée aux figures 6 et 7, les filtres d'émission 6ₐ et de réception 6_{b} et le duplexeur 7 dans le dispositif de branchement du système émetteur-récepteur (figure 1) ainsi que le dispositif de transposition en fréquence à guide d'onde 9 décrit précédemment sont réunis de manière plus compacte dans un coffret parallélépipédique métallique CF.

Comme montré à la figure 6, le coffret est composé de deux demi-blocs symétrique par rapport à un plan ici horizontal et confondu avec le plan de la figure 6. Du côté d'un accès coaxial 80 à l'antenne 8, le plan de symétrie du coffret est confondu avec le plan de symétrie, ayant pour trace IV-IV dans la figure 3, du dispositif de transposition 9 qui est complètement intégré au coffret. Chaque demi-bloc de coffret est réalisé par usinage, par exemple à l'aide d'une fraiseuse numérique.

Sur une face de chacun des demi-blocs du coffret CF en regard de l'autre demi-bloc sont prévues deux voies à hyperfréquence parallèles de demi-cavités pour former avec les demi-cavités dans l'autre demi-bloc, des guides d'onde à section rectangulaire et des cavités résonnantes à section circulaire dans le coffret. Ces deux voies sont analogues et constituent les filtres d'émission et de réception 6ₐ et 6_{b}. Les voies s'étendent entre des accès en câble coaxial longitudinaux respectivement reliés à la sortie de l'émetteur 4ₐ et à l'entrée du récepteur 4_{b} à travers des raccords coaxiaux 40ₐ et 40_{b} fixés à une face transversale du coffret, et des branches coudées 70ₐ et 70_{b} du duplexeur 7.

Du côté des accès coaxiaux, les voies comprennent chacune un tronçon coudé de guide d'onde rectangulaire 41ₐ, 41_{b}, et une série de cavités résonnantes cylindriques 60ₐ à 63_{b}, 60_{b} à 63_{b} qui sont reliées successivement deux à deux par des guides d'onde rectangulaire 6Iₐ, 6I_{b} de section rectangulaire très faible constituant des iris de couplage. De tels iris de couplage 42ₐ, 42_{b}, 71ₐ et 71_{b} couplent également des extrémités des guides d'onde d'accès 41ₐ et 41_{b} aux premières cavités 60ₐ 60_{b}, et les dernières cavités 63ₐ, 63_{b} à des extrémités des branches 70ₐ et 70_{b} également en guide d'onde rectangulaire dans le duplexeur 7.

Le duplexeur 7 comporte également une troisième branche en guide d'onde qui constitue une jambe d'un té. Les ailes du té sont formées par les branches 70ₐ et 70_{b}. La jambe du té forme le guide d'onde principal 90 déjà évoqué lors de la description du dispositif de transposition en fréquence 9. Les deux branches 70ₐ et 70_{b} ont au moins une dimension différente, en section transversale ou longitudinale, de manière à adapter le duplexeur aux fréquences d'émission et de réception. Par exemple, selon la réalisation illustrée à la figure 6, les branches 70ₐ et 70_{b} ont des sections transversales rectangulaires identiques et des longueurs Lₐ et L_{b} différentes. Dans le plan de jonction des deux branches est ainsi formé un court-circuit au regard d'ondes à la fréquence d'émission provenant de la branche 70ₐ de longueur Lₐ et d'ondes à la fréquence de réception dirigée vers la branche 70_{b} de longueur L_{b}.

En référence à la figure 7, le filtre d'émission 6_{b} formé par quatre cavités circulaires est maintenant détaillé, en sachant que la structure générale du filtre de réception 6_{b} est analogue.

Le nombre de pôles du filtre est par exemple choisi égal à quatre et désigne le nombre de cavités circulaires. De manière connue dans le domaine hyperfréquence, les trois dimensions d'une cavité résonnante déterminent la fréquence de résonance de cette cavité; par exemple les dimensions sont choisies pour exciter le mode TE₁₁₁. Afin de régler la fréquence centrale de bande passante du filtre, en dépendance du plan de fréquence de fonctionnement du système émetteur-récepteur, des plongeurs diélectriques 600ₐ, 610ₐ, 620ₐ et 630ₐ sont montés à coulissement axial à travers des bases des quatre cavités cylindriques 60ₐ , 61ₐ, 62ₐ et 63ₐ respectivement. De même, des vis métalliques d'accord 43ₐ , 6Vₐ et 72ₐ sont montées transversalement dans les iris 44ₐ , 6Iₐ et 71ₐ afin de régler la bande passante du filtre et d'étendre les tolérances sur les dimensions des iris.

Les plongeurs diélectriques coulissent et les vis tournent respectivement dans des orifices lisses et taraudés formés sur une face externe de l'un des deux demi-blocs du coffret CF opposée à la face sur laquelle sont usinées les demi-cavités et demi-guides.

## Revendications

1. Système de télébouclage pour tester un système émetteur-récepteur de radiotélécommunications comprenant en outre une chaîne d'émission (2ₐ, 3ₐ, 4ₐ) et une chaîne de réception (4_{b}, 3_{b}, 2_{b}), ledit système de télébouclage comprenant :
- des moyens (CT₁) pour émettre des premières séquences de données à une entrée de ladite chaîne d'émission,
- des moyens (CT₂) pour recevoir des secondes séquences de données produites à une sortie de la chaîne de réception en réponse auxdites premières séquences émises,
- des moyens de traitement (CT₃) pour comparer lesdites premières et secondes séquences de données afin de déduire des résultats de test dudit système émetteur-récepteur, et
- un moyen oscillateur (OS) activé par les moyens de traitement pour produire un signal d'oscillateur (S_{OS}) ayant une fréquence égale à une différence entre une fréquence d'émission relative à un signal micro-onde sortant de la chaîne d'émission et une fréquence de réception relative à un signal micro-onde entrant dans la chaîne de réception, en dépendance d'un plan de fréquence de fonctionnement dudit système émetteur-récepteur,
caractérisé en ce qu'il comprend des moyens de transposition en fréquence (9) comprenant un guide d'onde principal (90) ayant un accès recevant ledit signal micro-onde sortant de la chaîne d'émission (2ₐ , 3ₐ , 4ₐ) à travers un moyen de filtrage d'émission (6ₐ) et un duplexeur (7), et transmettant ledit signal micro-onde entrant dans la chaîne de réception (4_{b} , 3_{b} , 2_{b}) à travers ledit duplexeur (7) et un moyen de filtrage de réception (6_{b}),
un guide d'onde auxiliaire (914) ayant une section transversale plus petite que celle du guide d'onde principal (90) et débouchant transversalement dans le guide principal,
un moyen-support diélectrique de circuit imprimé micro-onde (92) logé dans le guide d'onde auxiliaire,
un moyen de couplage (951) supporté par ledit moyen-support pour coupler les guides d'onde principal (90) et auxiliaire (914), et
un moyen mélangeur (ME,933) supporté par le moyen-support pour mélanger, à travers le moyen de couplage (951), le signal d'oscillateur (S_{OS}) avec ledit signal micro-onde sortant reçu par ledit accès de guide d'onde principal afin de produire ledit signal micro-onde entrant transmis par ledit accès de guide d'onde principal.

2. Système de télébouclage conforme à la revendication 1, dans lequel les guides d'onde principal et auxiliaire (90,914) sont ménagés dans deux demi-blocs métalliques symétriques par rapport à et réunis suivant un plan longitudinal médian (IV-IV) commun aux deux guides d'onde, et le circuit imprimé (93) supporté par le moyen-support (92) est sensiblement disposé dans ledit plan médian.

3. Système de télébouclage conforme à la revendication 1 ou 2, dans lequel ledit moyen-support (92) supporte un filtre passe-bas imprimé (93I, 93C) interconnecté entre le moyen oscillateur (OS) et le moyen mélangeur (933).

4. Système de télébouclage conforme à l'une quelconque des revendications 1 à 3, dans lequel ledit moyen mélangeur (933) comprend une diode de Schottky dont une cathode reçoit ledit signal d'oscillateur (S_{OS}) à travers un filtre passe-bas (FI;93I,93C), et dont une anode est reliée au moyen de couplage (951) et à la masse à travers un brin conducteur (95).

5. Système de télébouclage conforme à l'une quelconque des revendications 1 à 4, dans lequel ledit moyen de couplage (951) est constitué d'un moyen de couplage électrique s'étendant sensiblement le long de l'axe du guide d'onde auxiliaire (914) et logé sensiblement à proximité d'une paroi dans le guide d'onde principal (90).

6. Système de télébouclage conforme à l'une quelconque des revendications 1 à 5, dans lequel ledit moyen de filtrage d'émission (6_{b}), ledit moyen de filtrage de réception (6ₐ), ledit duplexeur (7) et ledits guide d'onde principal et auxiliaire (90,914) sont sous la forme de guides d'onde ménagés dans deux demi-blocs métalliques (CF) symétriques par rapport à et réunis suivant un plan longitudinal axial des guides d'onde.

7. Système de télébouclage conforme à la revendication 6, dans lequel chacun des moyens de filtrage d'émission et de réception (6ₐ,6_{b}) comprend plusieurs cavités résonnantes cylindriques en cascade, de préférence réglables en fréquence, (60ₐ-63ₐ,60_{b}-63_{b}) couplées entr'elles et avec le duplexeur (7) par l'intermédiaire de moyens de couplage à guide d'onde rectangulaire (6Iₐ,6I_{b},71ₐ,71_{b}), de préférence réglables.

8. Système de télébouclage conforme à la revendication 6 ou 7, dans lequel le duplexeur (7) est composé de deux ailes (70ₐ,70_{b}) et d'une jambe d'un té en guide d'onde, lesdites ailes (70ₐ, 70_{b}) étant couplées respectivement aux moyens de filtrage d'émission et de réception (6ₐ,6_{b}) et ayant au moins une dimension différente, de préférence la longueur axiale, qui dépend desdites fréquences d'émission et de réception, et ladite jambe de té constituant ledit guide d'onde principal (90).

## Patentansprüche

1. Fernrückschleifsystem zum Testen eines Funkübertragungssendeempfängersystems, das unter anderem eine Sendekette (2ₐ, 3ₐ, 4ₐ) und eine Empfangskette (4_{b}, 3_{b}, 2_{b}) umfaßt, wobei das Fernrückschleifsystem umfaßt:
- Einrichtungen (CT₁) zum Senden von ersten Datenfolgen an einen Eingang der Sendekette,
- Einrichtungen (CT₂) zum Empfangen von an einem Ausgang der Empfangskette in Reaktion auf die ausgesendeten ersten Datenfolgen erzeugten zweiten Datenfolgen,
- Verarbeitungseinrichtungen (CT₃) zum Vergleichen der ersten und der zweiten Datenfolgen, um Testergebnisse des Sendeempfängersystems abzuleiten, und
- eine durch die Verarbeitungseinrichtungen aktivierte Oszillatoreinrichtung (OS) zum Erzeugen eines Oszillatorsignals (S_{OS}) mit einer Frequenz gleich einer Differenz zwischen einer auf ein aus der Sendekette ausgehendes Mikrowellensignal bezcgenen Sendefrequenz und einer auf ein in die Empfangskette eingehendes Mikrowellensignal bezogenen Empfangs frequenz in Abhängigkeit von einem Betriebsfrequenzplan des Sendeempfängersystems,
dadurch gekennzeichnet, daß es umfaßt: Frequenzumsetzeinrichtungen (9), die einen Hauptwellenleiter (90) mit einem Zugang umfassen, der das aus der Sendekette (2ₐ, 3ₐ, 4ₐ) ausgehende Mikrowellensignal über eine Sendefiltereinrichcung (6ₐ) und einen Duplexer (7) empfängt und das in die Empfangskette (4_{b}, 3_{b}, 2_{b}) eingehende Mikrowellensignal über den Duplexer (7) und eine Empfangsfiltereinrichtung (6_{b}) überträgt,
einen Hilfswellenleicer (914) mit einem kleineren Querschnitt als dem des Hauptwellenleiters (90), der quer im Hauptwellenleiter mündet,
eine im Hilfswellenleiter untergebrachte dielektrische Trägereinrichtung (92) für eine gedruckte Mikrowellenschaltung,
eine von der Trägereinrichtung getragene Koppeleinrichtung (951) zum Koppeln von Hauptwellenleiter (90) und Hilfswellenleiter (914),
eine von der Trägereinrichtung getragene Mischeinrichtung (ME, 933) zum Mischen, über die Koppeleinrichtung (951), des Oszillatorsignals (S_{OS}) mit dem über den Zugang des Hauptwellenleiters empfangenen ausgehenden Mikrowellensignals, um das durch den Zugang des Hauptwellenleiters übertragene eingehende Mikrowellensignal zu erzeugen.

2. Fernrückschleifsystem nach Anspruch 1, bei dem der Hauptwellenleiter (90) und der Hilfswellenleiter (914) in zwei metallischen Halbblöcken gebildet sind, die bezüglich einer longitudinalen Mittelebene (IV-IV) symmetrisch und an dieser vereinigt sind, die beiden Wellenleitern gemeinsam ist, und bei dem die von der Trägereinrichtung (92) getragene gedruckte Schaltung (93) im wesentlichen in dieser Mittelebene angeordnet ist.

3. Fernrückschleifsystem nach Anspruch 1 oder 2, bei dem die Trägereinrichtung (92) einen zwischen die Oszillatoreinrichtung (OS) und die Mischeinrichtung geschalteten gedruckten Tiefpaßfilter (93I, 93C) trägt.

4. Fernrückschleifsystem nach einem der Ansprüche 1 bis 3, bei dem die Mischeinrichtung (933) eine Schottkydiode umfaßt, von der eine Kathode das Oszillatorsignal (S_{OS}) über einen Tiefpaßfilter (FI; 93I, 93C) empfängt und von der eine Anode mit der Koppeleinrichtung (951) und der Masse über eine Leiterlitze (95) verbunden ist.

5. Fernrückschleifsystem nach einem der Ansprüche 1 bis 4, bei dem die Koppeleinrichtung (951) durch ein elektrisches Koppelelement gebildet ist, das sich im wesentlichen entlang der Achse des Hilfswellenleiters (914) erstreckt und im wesentlichen in der Nähe einer Wand im Hauptwellenleiter (90) untergebracht ist.

6. Fernrückschleifsystem nach einem der Ansprüche 1 bis 5, bei dem die Sendefiltereinrichtung (6ₐ), die Empfangsfiltereinrichtung (6_{b}), der Duplexer (7) und Haupt- und Hilfswellenleiter (90, 914) in Form von Wellenleitern sind, die in zwei Halbblöcken (CF) gebildet sind, die bezüglich einer longitudinalen axialen Ebene der Wellenleiter symmetrisch und an dieser vereinigt sind.

7. Fernrückschleifsystem nach Anspruch 6, bei dem jede der Sende- und Empfangsfiltereinrichtungen (6ₐ, 6_{b}) mehrere zylindrische Resonatorhohlräume (60ₐ-63ₐ, 60_{b}-63_{b}) hintereinander, vorzugsweise mit regelbarer Frequenz, umfaßt, die aneinander und an den Duplexer (7) über vorzugsweise regelbare Koppeleinrichtungen mit rechteckigem Wellenleiter (6Ia, 6Ib, 71ₐ, 71_{b}) gekoppelt sind.

8. Fernrückschleifsystem nach Anspruch 6 oder 7, bei dem der Duplexer (7) aus zwei Flügeln (70ₐ, 70_{b}) und einem Bein eines T als Wellenleiter aufgebaut ist, wobei die Flügel (70ₐ, 70_{b}) jeweils an die Sendefiltereinrichtungen bzw. die Empfangsfiltereinrichtungen (6ₐ, 6_{b}) gekoppelt sind und wenigstens eine unterschiedliche Ausdehnung, vorzugsweise die axiale Länge, haben, die von Sende- und Empfangs frequenz abhängt, und wobei das T-Bein den Hauptwellenleiter (90) bildet.

## Claims

1. A remote loop-back system for testing a radio telecommunications transmitter-receiver system, also comprising a transmission chain (2ₐ, 3ₐ, 4ₐ) and a reception chain (4_{b}, 3_{b}, 2_{b}), the said remote loop-back system comprising:
- means (CT₁) for transmitting first sequences of data to an input of the transmission chain,
- means (CT₂) for receiving second sequences of data produced at an output of the reception chain in response to the first sequences transmitted,
- processing means (CT₃) for comparing the said first and second sequences of data in order to deduce test results of the said transmitter-receiver system, and
- an oscillator means (OS) activated by the processing means to produce an oscillator signal (S_{OS}) having a frequency equal to a difference between a transmission frequency relative to a microwave signal output by the transmission chain and a reception frequency relative to a microwave signal entering the reception chain, in dependence on an operating frequency plane of the said transmitter-receiver system,
characterised in that it comprises frequency transposition means (9) comprising a main wave guide (90) having an access receiving the said microwave signal output from the transmission chain (2ₐ, 3ₐ, 4ₐ) via a transmission filtering means (6ₐ) and a duplexer (7), and transmitting the said microwave signal entering the reception chain (4_{b}, 3_{b}, 2_{b}) via the said duplexer (7) and a reception filtering means (6_{b}),
an auxiliary wave guide (914) having a smaller cross-section than that of the main wave guide (90) and leading transversely into the main guide,
a microwave printed circuit dielectric support means (92) housed in the auxiliary wave guide,
a coupling means (951) supported by the said support means for coupling the main wave guide (90) and the auxiliary wave guide (914), and
a mixer means (ME,933) supported by the support means for mixing, via the coupling means (951), the oscillator signal (S_{OS}) with the said output microwave signal received by the said main wave guide access in order to produce the said incoming microwave signal transmitted by the said main wave guide access.

2. A remote loop-back system according to claim 1, wherein the main and auxiliary wave guides (90, 914) are arranged in two metal half-blocks which are symmetrical with respect to and are connected along a central longitudinal plane (IV-IV) common to the two wave guides, and the printed circuit (93) supported by the support means (92) is disposed substantially in the said central plane.

3. A remote loop-back system according to claim 1 or 2, wherein the said support means (92) supports a printed low-pass filter (93I, 93C) interconnected between the oscillator means (OS) and the mixer means (933).

4. A remote loop-back system according to any one of claims 1 to 3, wherein the said mixer means (933) comprises a Schottky diode, one cathode of which receives the said oscillator signal (S_{OS}) via a low-pass filter (FI; 93I, 93C) and one anode of which is connected to the coupling means (951) and to earth via a conductor strand (95).

5. A remote loop-back system according to any one of claims 1 to 4, wherein the said coupling means (951) comprises an electric coupling means extending substantially along the axis of the auxiliary wave guide (914) and housed substantially near a wall in the main wave guide (90).

6. A remote loop-back system according to any one of claims 1 to 5, wherein the said transmission filtering means (6_{b}), the said reception filtering means (6ₐ), the said duplexer (7) and the said main and auxiliary wave guides (90, 914) are in the form of wave guides arranged in two metal half-blocks (CF) which are symmetrical with respect to and are connected along an axial longitudinal plane of the wave guides.

7. A remote loop-back system according to claim 6, wherein each of the transmission and reception filtering means (6ₐ, 6_{b}) comprises a plurality of cylindrical resonant cavities in cascade, which are preferably controllable in respect of frequency (60ₐ - 63ₐ, 60_{b} - 63_{b}) which are coupled to one another and to the duplexer (7) via preferably controllable rectangular wave guide coupling means (6Iₐ, 6I_{b}, 71ₐ, 71_{b}).

8. A remote loop-back system according to claim 6 or 7, wherein the duplexer (7) consists of two flanges (70ₐ, 70_{b}) and a leg of a Tee wave guide, the said flanges (70ₐ, 70_{b}) being respectively coupled to the transmission and reception filtering means (6ₐ, 6_{b}) and having at least one different dimension, preferably the axial length, which depends on the said transmission and reception frequencies, and the said Tee leg constituting the said main wave guide (90).
